# EUROPEAN PATENT APPLICATION

(11) **EP 4 603 727 A1**
(43) Date of publication of application: **20.08.2025**
(21) Application number: 24157965.5
(22) Date of filing: 15.02.2024
(51) Int. Cl.: F16J 15/06, F16J 15/14, H01M 10/613, H01M 10/625, H01M 10/655

(54) **ASSEMBLY AND METHOD FOR FORMING AN ASSEMBLY**

(71) Applicant: Constellium Singen GmbH, 78224 Singen (DE)
(72) Inventor: SCHWARZ, Kai, 78244 GOTTMADINGEN (DE); SULER, Adam, 71522 BACKNANG (DE)
(74) Representative: Constellium - Propriété Industrielle

(57) **Abstract**

The invention relates to an assembly (10; 10a), having an extruded profile (14) formed from aluminum, in which at least one channel (20) is formed in the direction of a longitudinal axis (18) of the extruded profile (14), having a closing device (35; 35a) for sealing an end-face end region (22) of the extruded profile (14), wherein the closing device (35; 35a) protrudes into an opening (24) of the extruded profile (14) formed in the end-face end region (22) of the extruded profile (14).

## Description

### TECHNICAL FIELD OF THE INVENTION

The invention relates to an assembly with an extruded profile formed from aluminum, which is sealed in the region of a front opening of the extruded profile by means of a closing device. The invention also relates to a method for forming an assembly according to the invention.

### BACKGROUND

An assembly with the features of the preamble of claim 1 is known from CN 2013716951 U. The known assembly has an extruded profile consisting of aluminum, which can be sealed or closed at an end-face end region by means of a closing device. For this purpose, the closing device, which is designed in the form of an injection molded part consisting of plastic, is inserted into the front opening of the extruded profile, wherein a section of the closing device abuts against the end face of the extruded profile on the outside and thus a stop is formed for the insertion movement of the closing device into the opening.

Furthermore, a cooling device for batteries with a base plate having cooling channels is known from WO 2023/052386 A1. A closing device consisting of two elements is inserted in an opening on the end face of the base plate for sealing the cooling channels. The first element of the closing device consists of an elastomer and forms a seal, while the second element of the closing device consists of another material and has a greater rigidity than the first element. In order to fasten the closing device in the base plate, it can be provided to fasten a frame element on the end face of the base plate. The frame element covers both the opening in the base plate as well as the closing device. Alternatively, it can be provided that the second element of the closing device is connected to the base plate by means of mechanical fastening elements such as rivets or the like. For this purpose, additional processing steps are required on the second element of the closing device and the base plate.

### SUMMARY OF THE INVENTION

The assembly according to the invention with the features of claim 1 has the advantage that it enables the extruded profile to be sealed by means of a closing device in a particularly simple and effective way without mechanical fastening means such as screws, rivets or the like, in order to prevent the escape of the medium in the extruded profile, which may be under excess pressure. The closing device designed according to the invention can also safely prevent media from entering the opening of the extruded profile. The medium can be a liquid or a gas depending on the application. In addition, the prevention of the escape of medium from the extruded profile means a required complete tightness or else the allowance of (minor) permissible leaks, depending on the application.

The invention is based on the concept of providing a two-part closing device, between the two elements of which a sealant is arranged which, when the two elements of the closing device are assembled, is displaced radially outwards within the opening as far as an inner wall of the extruded profile, where it forms a circumferential sealing contour in order to thereby seal the closing device to the inner cross-section of the extruded profile.

Against the background of the above explanations, an assembly according to the invention with the features of claim 1 therefore has an extruded profile formed from aluminum, in which at least one channel is formed in the direction of a longitudinal axis of the extruded profile. Furthermore, a closing device for sealing an end-face end region of the extruded profile is provided, wherein the closing device protrudes into an opening of the extruded profile formed in the end-face end region of the extruded profile. The assembly according to the invention is characterized in that the opening in the extruded profile has a stop for limiting an insertion movement of the closing device into the opening in the direction of the longitudinal axis. Furthermore, the closing device consists of two elements arranged one behind the other and opposite each other in the direction of the longitudinal axis. A first element abuts against the stop in the opening, while a second element, which at least partially protrudes into the opening of the extruded profile, is arranged in abutting contact with the first element in certain areas. Furthermore, it is provided that the two elements each extend with circumferential surfaces at least in certain areas up to an inner wall of the extruded profile delimiting the opening, wherein a sealant is arranged between mutually facing end faces of the elements, which sealant, when the closing device is mounted, is in contact with the inner wall of the opening and forms a closed sealing contour.

Advantageous further developments of the assembly according to the invention are listed in the subclaims.

In order to achieve a radial displacement of the sealant in the direction of the inner wall of the opening when in particular the second element is inserted, it is provided that between the two end faces of the elements a receiving space for the sealant is formed, and that a height of the receiving space extending parallel to the longitudinal axis of the extruded profile increases at least in sections in the direction of the inner wall of the opening. This achieves the effect that when the two elements approach each other in the direction of the longitudinal axis the sealant is displaced radially outward in relation to the longitudinal axis in the direction of the inner wall.

A preferred geometrical design of the assembly provides that the cross-section of the opening is rectangular, and that the end faces of the two elements are each formed symmetrically to a first longitudinal plane extending in the direction of the longitudinal axis and a second longitudinal plane extending perpendicularly to the first longitudinal plane. However, the cross-sections of the opening and the elements of the closing device can also be formed differently depending on the application, for example, round or with any asymmetrical cross-sections.

Preferably, the two elements of the closing device consist of the same material. However, depending of the application, the two elements of the closing device consist of different material.

It is also preferable if the two elements of the closing device consist of the same material as the extruded profile, which they close. In particular, this has the advantage that the extruded profile and the elements of the closing device have the same thermal expansion coefficients, so that the adhesive commonly used for sealing and fastening the closing elements is not subjected to additional mechanical stress due to different expansions of the extruded profile and the elements in the event of temperature changes. The use of the same material for the extruded profile and the closing device also has the advantage that the selection of the adhesive used is simplified, since it only has to have good adhesive properties with a single material. This is also relevant in connection with the use of the assembly as a heat sink, as when using glycol as a coolant, for example, the adhesive must be both chemically resistant to the glycol and ensure the required strength of the adhesive bond. This is easier to realize with elements consisting of the same material and to be joined together.

Preferably, the elements of the closing device consist of metallic material, in particular, of aluminum or an aluminum alloy. The elements of the closing device can be produced in different ways, for example, as die-cast parts, as forged parts, as milled parts or by cutting off sections from an extrusion component. However, in principle, depending on the application, it is also possible that the two elements of the closing device are designed as injection molded parts and consist of plastic.

In the event that a plurality of channels arranged parallel to one another are formed in the extruded profile, between which a medium is to be conveyed, it may be provided that the first element facing the channels has a recess in a central region on the side facing the channels of the extruded profile to form a deflection region between adjacent channels of the extruded profile, and that the recess is delimited by an end face of the first element which abuts against a base of the opening which delimits the opening in the direction of the longitudinal axis and forms the stop.

It is preferable if the sealant is an adhesive. This not only achieves a sealing effect, but additionally also forms a material connection between the extruded profile and the elements of the closing device. In particular, when an adhesive is used additional mechanical connecting means between the closing device and the extruded profile can be dispensed with. This also makes it very easy to bridge or compensate for gaps between the opening and the circumferential surface of the closing device, which enables the closing device to be manufactured with relatively large tolerances or an undersize for the opening in the extruded profile. If the sealant has no adhesive properties, it can be provided in particular to form a press fit between the closing device and the opening in the extruded profile in order to avoid additional (mechanical) fastening means, so that the closing device is fixed by pressing it into the opening of the extruded profile.

A further preferred constructive design provides that the two elements are of identical design. This makes it possible to reduce the investment required to design the injection molding tools, particularly in connection with injection molded parts.

Alternatively, however, it is also conceivable that the first or second element has an extension extending in the direction of the longitudinal axis, which engages in a diametrically opposed opening of the second or first element. Such a design has, in particular, the advantage that the two elements align or center each other when the second element is inserted in the direction of the first element.

In order to form an as compact an assembly as possible, it can be provided that the closing device is arranged completely within the opening in the extruded profile. This means that the closing device is also arranged so as to be protected within the extruded profile

A preferred field of application of the assembly is that the extruded profile forms a heat sink, and that the heat sink is part of a cooling device for cooling a vehicle drive battery.

Furthermore, the invention also comprises a method for forming an assembly according to the invention described so far, wherein the method comprises at least the following steps: First, the first element of the closing device is inserted into the opening in the extruded profile up to the stop that limits the opening. The sealant is then dispensed onto an end face of the first element facing away from the opening and/or an end face of the second element facing the opening. Finally, the second element is inserted into the opening and the sealant is displaced through the two elements in the direction of the inner wall of the opening until the sealant is in contact with the inner wall and forms the sealing contour.

A further development of the method additionally provides that the second element is inserted into the opening until it comes into abutting contact with the first element. This abutting contact also characterizes a state, in which the sealant has been safely displaced to the inner wall of the opening.

In order to ensure the circumferential sealing contour, the volume of the dispensed sealant corresponds at least to the volume of the receiving space formed between the end faces of the two elements of the closing device.

Further advantages, features and details of the invention result from the following description of preferred embodiments of the invention and on the basis of the drawings.

### BRIEF DESCRIPTION OF THE DRAWINGS

- Fig. 1: shows the components of the assembly for the exemplary design of an assembly with an extruded profile consisting of aluminum and two elements of a closing device in a perspective view,
- Fig. 2: shows a longitudinal section through the assembly, in which the closing device seals the extruded profile,
- Fig. 3: shows a modified assembly compared to Fig. 1, also in a perspective view,
- Fig. 4: shows a longitudinal section through the assembly according to Fig. 3, in which the closing device seals the extruded profile and
- Fig. 5: shows a front view of the extruded profile of the assembly according to Fig. 1, in which an element of the closing device is arranged in an opening of the extruded profile and a sealant is dispensed onto the element.

### DETAILED DESCRIPTION

Identical elements or elements with identical function are provided with identical reference signs in the figures.

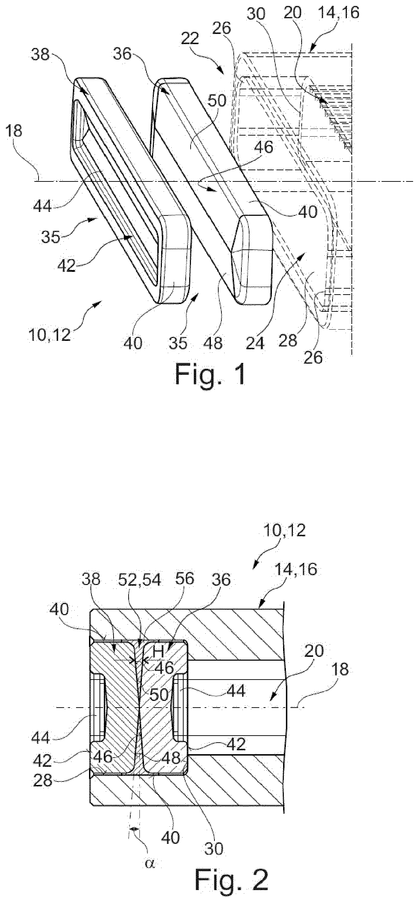

In Figs. 1 and 2 a first assembly 10 is shown, which forms a heat sink unit 12. The heat sink unit 12 is a component of a cooling device, in which within the heat sink unit 12 a medium (not shown), for example water, is conveyed, in order to cool a unit connected to the heat sink unit 12, in particular, a vehicle drive battery.

The assembly 10 or the heat sink unit 12 has an extruded profile 14 consisting of aluminum, which forms a heat sink 16 when the assembly 10 is used as heat sink unit 12. At least one channel 20 formed in the direction of the longitudinal axis 18 of the extruded profile 14 is formed in the extruded profile 14. In the event of a heat sink 16, it is typically provided that a plurality of channels 20 arranged parallel to each other and separated from each other by longitudinal bars or the like are present, between which the medium mentioned is conveyed or circulated back and forth.

In the region of an end-face end region 22, the extruded profile 14 has an opening 24, which in the cross-section, i.e. in a plane extending perpendicularly to the longitudinal axis 18 is essentially rectangular in shape. Typically, however, the corner areas 26 of the opening 24 are rounded or provided with a radius for manufacturing reasons.

The opening 24 is formed by a separate manufacturing step, typically by milling, after the extruded profile 14 has been manufactured. The opening 24 is bounded by an inner wall 28 in a direction extending perpendicularly to the longitudinal axis 18. The opening 24 is designed as a blind hole opening, so that a stop 30 in the form of a step extending along the inner wall 28 is formed at the bottom of the opening 24.

A closing device 35 is provided to seal the at least one channel 20, in particular, if a medium under excess pressure is arranged within the at least one channel 20. In the embodiment shown in Figs. 1 and 2, the closing device 35 comprises two identically designed elements 36, 38, which are designed as die-cast parts and consist of aluminum. However, depending on the application, it is also possible that the elements 36, 38 are designed as injection molded parts made of plastic. The two, in each case plate-shaped elements 36, 38 have circumferential surfaces 40 in a plane extending perpendicularly to the longitudinal axis 18, wherein the cross-section of elements 36, 38 or their circumferential surfaces 40 are adapted to the cross-section of the opening 24 or the shape of the inner wall 28. The dimensioning of the opening 24 of the extruded profile 14 relative to the cross-section of the two elements 36, 38 is preferably such that in a joined state, in which the closing device 35 is arranged within the opening 24 of the extruded profile 14, a sliding or press fit is formed between the elements 36, 38 of the closing device 35 and the opening 24.

In the region of a first end face 42 of the two elements 36, 38, an approximately rectangular recess 44 is formed. A second end face 46 on the two elements 36, 38, which is arranged opposite the first end face 42, is not flat, but has at least two end face sections 48, 50 arranged at an angle a, which is typically between 5° and 15°.

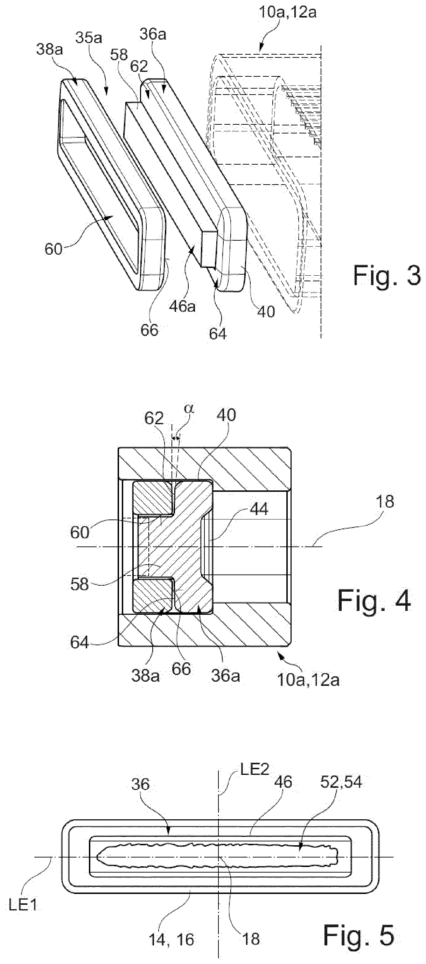

To close the opening 24 of the extruded profile 14, the two elements 36, 38 of the closing device 35 are arranged relative to the opening 24 of the extruded profile 14 in such a way that the respective end face sections 48, 50 or the two second end faces 46 of the two elements 36, 38 are arranged opposite one another. The opening 24 in the extruded profile 14 is closed by first inserting or pressing the element 36 into the opening 24 until its first end face 42 is abuts against the opening 24 in the region of the stop 30. A sealant 52, in particular an adhesive 54, is then dispensed in the region of the second end face 46 of the element 36 as shown in Fig. 5. In Fig. 5, the sealant 52 or the adhesive 54 is applied to the end face 46 in the form of a bead. Then, as shown in Fig. 2, the second element 38 is inserted or pushed into the opening 24 until the two second end faces 46 of the elements 36, 38 are arranged in abutting contact with one another or touch one another.

It can be seen from Fig. 2 that a height H extending parallel to the longitudinal axis 18 between the two second end faces 46 increases in the direction of the inner wall 28 of the opening 24. This has the effect that when the two elements 36, 38 move towards each other, the sealant 52 or the adhesive 54 located in the region between the two second end faces 42 is displaced in the direction of the inner wall 28 and forms a circumferential sealing contour 56 there with abutting contact against the inner wall 28, so that neither an escape nor an entry of media into the extruded profile 14 can occur.

In order to ensure the circumferential sealing contour 56, the volume of the sealant 52 or the adhesive 54 preferably corresponds at least to the volume of a receiving space 57 formed between the two opposing second end faces 46 for the sealant 52 or the adhesive 54. Upon abutting contact between the two second end faces 46, an excess volume of sealant 52 or adhesive 54 is displaced into the circumferential gap between the circumferential surfaces 40 of the elements 36, 38 and the inner wall 28.

As can also be seen in particular with reference to Fig. 5, the end faces 42, 46 of the two elements 36, 38 in the embodiment example shown are each symmetrical with respect to a first longitudinal plane LE1 extending in the direction of the longitudinal axis 18 and a second longitudinal plane LE2 perpendicular to the first longitudinal axis LE1.

The assembly 10a or heat sink unit 12a shown in Figs. 3 and 4 differs from the assembly 10 or the heat sink unit 12 by a closing device 35a, in which the two elements 36a, 38a are designed differently. In particular, the element 36a has a cross-sectionally rectangular extension 58 on the second end face 46a facing away from the recess 44, which extends circumferentially at a distance from the circumferential surface 40. The extension 58 engages in a diametrically opposed opening 60 in the second element 38a, which opening is formed as a breakthrough.

In the embodiment shown in Figs. 3 and 4, the second end face 46a of the element 36a has end face sections 62, 64 arranged obliquely at an angle α in the region outside the extension 58. In contrast, the second end face 66 of the second element 38a is flat in the region outside the recess 60.

In addition, it is mentioned that it is also possible for the functionality of the closing device 35a to also provide the second end face 66 of the element 38a with obliquely arranged end face sections if necessary, or to form the second end face 46a of the first element 36a flat, if the second end face 66 of the element 38a has obliquely arranged end face sections.

The sealant 52 or the adhesive 54 (not represented in fig 4) is dispensed in the closing device 35a in the region of the first element 36a outside the extension 58 in the region of the second end face 46a. In analogy to the closing device 35, the sealant 52 or the adhesive 54 is displaced as far as the inner wall 28 of the opening 24 when the two elements 36a, 38a are moved towards each other to form a circumferential sealing contour 56.

The assembly 10, 10a or heat sink unit 12, 12a described so far can be altered or modified in a variety of ways without deviating from the concept of the invention. Thus, it is generally not necessary for the second element 38, 38a to be fully inserted into the opening 24 of the extruded profile 14 in order to be flush with the end-face end region 22 of the extruded profile 14. It is also sufficient if the second element 38, 38a only protrudes in certain areas into the opening 24. It is only essential that when the second element 38, 38a is inserted, the sealant 52 or the adhesive 54 is displaced as far as the inner wall 28 in order to form the closed sealing contour 56.

### List of reference

- 10, 10a: Assembly
- 12, 12a: Heat sink unit
- 14: Extruded profile
- 16: Heat sink
- 18: Longitudinal axis
- 20: Channel
- 22: End region
- 24: Opening
- 26: Corner region
- 28: Inner wall
- 30: Stop
- 35, 35a: Closing device
- 36, 36a: 1st element
- 38, 38a: 2nd element
- 40: Circumferential surface
- 42: 1st end face
- 44: Recess
- 46, 46a: 2nd end face
- 48: End face section
- 50: End face section
- 52: Sealant
- 54: Adhesive
- 56: Sealing contour
- 57: Receiving space
- 58: Extension
- 60: Opening
- 62: End face section
- 66: 2nd end face

- H: Height
- LE1: 1st longitudinal plane
- LE2: 2nd longitudinal plane

- α: Angle

## Claims

1. An assembly (10; 10a), having an extruded profile (14) which is formed from aluminum and in which at least one channel (20) is formed in the direction of a longitudinal axis (18) of the extruded profile (14), having a closing device (35; 35a) for sealing an end-face end region (22) of the extruded profile (14), wherein the closing device (35; 35a) protrudes into an opening (24) of the extruded profile (14) formed in the end-face end region (22) of the extruded profile (14),
**characterized in**
**that** the opening (24) in the extruded profile (14) has a stop (30) for limiting an insertion movement of the closing device (35; 35a) into the opening (24) in the direction of the longitudinal axis (18), that the closing device (35; 35a) consists of two elements (36; 36a, 38; 38a) arranged one behind the other and opposite each other in the direction of the longitudinal axis (18), a first element (36; 36a) which abuts against the stop (30) in the opening (24), and a second element (38; 38a) which protrudes at least partially into the opening (24) of the extruded profile (14) and is arranged in abutting contact with the first element (36; 36a) in certain areas, wherein the two elements (36; 36a, 38; 38a) each extend with circumferential surfaces (40) at least in certain areas up to an inner wall (28) of the extruded profile (14) delimiting the opening (24), and wherein a sealant (52) is arranged between mutually facing end faces (46; 46a, 66) of the elements (36; 36a, 38; 38a), which sealant when the closing device is mounted is in contact with the inner wall (28) of the opening (24) and forms a closed sealing contour (56).

2. The assembly according to claim 1,
**characterized in**
**that** between the two end faces (46; 46a,66) of the elements (36; 36a, 38; 38a), a receiving space (57) is formed for the sealant (52), and that a height (H) of the receiving space (57) extending parallel to the longitudinal axis of the extruded profile (18) increases at least in sections in the direction of the inner wall (28) of the opening (24).

3. The assembly according to claim 1 or 2,
**characterized in**
**that** the cross-section of the opening (24) is rectangular, and that the end faces (42, 46; 46a, 66) of the two elements (36; 36a, 38; 38a) are each formed symmetrically with respect to a first longitudinal plane (LE1) extending in the direction of the longitudinal axis (18) and a second longitudinal plane (LE2) extending perpendicularly to the first longitudinal plane (LE1).

4. The assembly according to any one of claims 1 to 3,
**characterized in**
**that** the two elements (36; 36a, 38; 38a) of the closing device (35; 35a) are designed as die-cast parts consisting of aluminum.

5. The assembly according to claims 1 to 4,
**characterized in**
**that** the first element (36; 36a) has, on the side facing the opening (24) of the extruded profile (14), a recess (44) in a central region on the side facing the channels of the extruded profile for forming a deflection region between adjacent channels (20) of the extruded profile (14), and that the recess (44) is delimited by an end face (42) of the first element (36; 36a), which abuts against the stop (30) of the opening (24).

6. The assembly according to any one of claims 1 to 5,
**characterized in**
**that** the sealant (52) is an adhesive (54).

7. The assembly according to any one of claims 1 to 6,
**characterized in**
**that** the two elements (36, 38) of the closing device (35) are of identical design.

8. The assembly according to any one of claims 1 to 6,
**characterized in**
**that** the first or the second element (36a, 38a) of the closing device (35a) has an extension (58) extending in the direction of the longitudinal axis (18), which engages in a diametrically opposed opening (60) of the second or first element (36a, 38a).

9. The assembly according to any one of claims 1 to 8,
**characterized in**
**that** the closing device (35; 35a) is arranged completely within the opening (24) in the extruded profile (14).

10. The assembly according to any one of claims 1 to 9,
**characterized in**
**that** the extruded profile (14) forms a heat sink (16), and that the heat sink (16) is part of a cooling device for cooling a vehicle drive battery.

11. A method for forming an assembly (10; 10a), which is designed according to any one of claims 1 to 10, comprising at least the following steps:
- Inserting the first element (36; 36a) of the closing device (35; 35a) into the opening (24) in the extruded profile (14) up to the stop (30) that limits the opening (24)
- Dispensing the sealant (52) onto an end face (46; 46a) of the first element (36; 36a) facing away from the opening (24) and/or an end face (46) of the second element (38) facing the opening (24)
- Inserting the second element (36; 38a) into the opening (24) and displacing the sealant (52) through the two elements (36; 36a, 38; 38a) in the direction of the inner wall (28) of the opening (24) until the sealant (52) is in contact with the inner wall (28) and forms the sealing contour (56).

12. The method according to claim 11,
**characterized in**
**that** the second element (38; 38a) is inserted into the opening (24) until it is in abutting contact with the first element (36; 36a).

13. The method according to claim 11 or 12,
**characterized in**
**that** the volume of the dispensed sealant (52) corresponds at least to the volume of the receiving space (57) between the end faces (46; 46a, 66) of the elements (36; 36a, 38; 38a).
